# EUROPEAN PATENT SPECIFICATION

(11) **EP 2 492 159 B1**
(45) Date of publication and mention of the grant of the patent: **25.12.2013**
(21) Application number: 11156166.8
(22) Date of filing: 28.02.2011
(51) Int. Cl.: B60R 22/44

(54) **Method and system for seat belt retraction speed control**
Verfahren und System zur Steuerung der Sitzgurteinziehgeschwindigkeit
Procédé et système pour contrôle de vitesse de rétraction de ceinture de sécurité

(43) Date of publication of application: 29.08.2012
(73) Proprietor: Volvo Car Corporation, 40 531 Göteborg (SE)
(72) Inventor: Aldeborg, Gert, 45197, Uddevalla (SE); Adolfsson, Peter, 42244, Hisings Backa (SE)

(56) References cited:
- EP-A2- 1 293 401
- DE-A1- 3 149 573

## Description

### TECHNICAL FIELD

The present invention concerns seat belts used for any type of vehicle or transportation seat where a passenger is to be fastened by a seat belt. More particularly, the present invention relates to a method and a system for retracting a seat belt webbing. The invention is intended for use particularly but not exclusively in a passenger car, a bus and a heavy goods vehicle but is applicable to any other type of vehicle provided with a seat, such as a truck or a snow plough.

### BACKGROUND

In vehicles of today, a number of different safety arrangements are present. An example of such safety arrangement is the seat belt pretensioner. The main task of the seat belt pretensioner is, often by use of an electric motor, to tighten the seat belt in order to pull the occupant against the backrest of the vehicle seat, thereby reducing the risk of injury in the event of a collision. Further, the seat belt mechanism ensures that the applied seat belt rest firmly but comfortably against an occupant's body during normal driving circumstances. Reversible seat belt pretensioners are active safety systems, intended to be activated a number of times based on signals like the steering angle and the speed of the vehicle indicating dangerous driving situations and the possibility of an imminent crash. Such systems are often provided with a rotation sensor to monitor the seat belt webbing retraction speed.

When a seat belt is not in use, it is to be wound up properly around the belt reel. After the occupant has un-buckled the seat belt tongue from the buckle, a retractor retracts the webbing and the tongue via a mechanical spring mechanism present in the retractor, until the webbing and the tongue reach a storing position. The requirements on the retracting spring mechanism are to robustly and securely retract the webbing in full even if i.e. the tongue is leaning on the door sealing in the door opening, or in the case of environmental parameters like low temperature, or during any other circumstances interfering with the retracting procedure. Thus, to ensure proper functionality, such spring mechanisms are applying a relatively large rewinding torque on the belt reel, resulting in high retraction speed. A problem arises in the end of the retraction procedure, namely that due to high retraction speed, high impact of the tongue when a hit against the vehicle interior trim results in dent marks and a general impression of poor quality. Attempts to solve the above stated problem have been presented. In GB 2,335,890A it is disclosed a seat belt system with powered retraction of a seat belt. In the known arrangement, an electric motor, used for seat belt pre-pretensioner is also arranged to retract the seat belt when it is not in use. In the known device, when release of the seat belt is detected, retraction of the seat belt starts with a constant magnitude of driving force applied by the motor. The disclosed system is an active system, totally depending on predetermined actions activated by predetermined steps and/or conditions. The seat belt retraction action is started by a signal, indicating release of the seat belt tongue from the seat belt buckle. Thereafter the electric motor starts the retraction of the seat belt with high speed, and then, when a specific point in time is reached, the speed of the electric motor is reduced.

A disadvantage which such an active system is that it totally depends on signals generated by actions initiated by the user of the seat belt, and that the system always reacts in the same way when such signals are present.

Another example of an active system is disclosed in the German patent application no.

DE 3149573, which discloses the preamble of claim 1 and claim 9 and relates to a device for winding a seat belt of vehicles. The device comprises a winding drum, which winds a belt band and is loaded in the winding direction by a winding spring, and on which engages an electric motor connectable as a function of the operating state. To increase comfort in the wearing of a seat belt arrangement equipped with a winding device of this type and at the same time, in particular, to reduce the pull-out force necessary for pulling out the belt band, an electric motor is to engage counter to the effect of the winding spring and be arranged so as to be connected only when the winding drum rotates in the unwinding direction. Yet another example of an active system is disclosed in EP 1,293,401 A which discloses a seat belt retractor with a spool. When the belt winding speed of the spool by the spring means is not more than the predetermined value, the motor-power transmission device is turned on so that the winding of the seatbelt webbing is performed by power of the motor.

As is widely known from experience when it comes to the human mind, human beings are instead more or less likely to not act exactly in the same way in one situation compared to another. Applied to the above described system, a problem will occur for example if a driver of a car releases the seat belt, but suddenly changes his mind and wants to refasten the seat belt to drive away again. The retraction action starts when the seat belt is released, and as a result the user may find himself struggling against the force of the electric motor starting the retraction action at the same time as the user instead tries to refasten the seat belt. A similar problem will occur if the user of a seat belt attempts to temporarily loosen the seat belt in order to for example reach something in the back seat or in the glove compartment, and simply wishes to refasten the seat belt directly after. Such situations may not only lead to irritation, giving the user the impression of not being in control of his own seat belt, but may also lead to damages to the electric motor or the mechanisms involved.

### SUMMARY

An object of the present invention is to overcome or ameliorate at least one of the disadvantages of the prior art.

According to a first aspect of the present invention, this object is achieved by a method for seat belt retraction speed control. The seat belt to be retracted is provided with a tongue and a buckle for fastening the seat belt when in use. A seat belt webbing spool for storing the seat belt is further provided. The webbing spool is arranged to rotate in a belt withdrawal direction and in an opposite belt retraction direction. The present method comprises the steps of: rotating the webbing spool in the retraction direction by a biasing arrangement, thereby retracting the seat belt webbing, monitoring the retraction of the seat belt webbing, and, if the retraction speed exceeds a predetermined threshold value, limiting the retraction speed of the webbing by controlling the webbing speed by an electrical driving arrangement.

An advantage with the present method is that the end speed of the seat belt retraction action applied when the seat belt is to be placed in its storage position is controlled, and thereby the risk of damages of the vehicle interior due to high speed and high impact of the webbing and the tongue is eliminated, or at least reduced. A further advantage is that due to the use of a passive retraction function achieved by the biasing arrangement, a user, that for any reason changing his mind when releasing the seat belt, will not experience any discomfort; the seat belt will react in a familiar way irrespective of the behavior of the user.

The presented method comprises both a passive retraction action, namely the retraction achieved by the biasing arrangement, and an active retraction action achieved by the electrical driving arrangement. By such combination of passive and active retraction, the presented method ensures proper functionality when it comes to in an active, controlled way retract the seat belt webbing to a storage position, and still not ending up in conflict with a user, irrespective of any irrational, human behavior.

In another embodiment comprises the method the further step of detecting if the tongue and the buckle are disengaged from each other.

In another embodiment is, in the step of monitoring, the seat belt webbing speed registered by measuring the rotational speed of said seat belt webbing spool.

In another embodiment is, in the step of limiting, the seat belt webbing speed limited by controlling the rotational speed of said seat belt webbing spool.

In another embodiment, the method further comprises the steps of detecting if an end position is reached by said webbing spool, and, if the end position is reached, stopping said electrical driving arrangement.

In yet another preferred embodiment, the electrical driving arrangement comprises at least one electrical motor and an electrical control unit, and the method further comprises the step of controlling the at least one motor via the electrical control unit.

In another preferred embodiment, the method comprises the further step of controlling the at least one motor by Pulse Width Modulation PWM.

According to another aspect of the present invention, a system for seat belt retraction speed control is provided. The system comprises: a seat belt to be retracted, the seat belt being provided with a seat belt webbing, and a tongue and a buckle for fastening the seat belt when in use, a seat belt webbing spool for storing the seat belt webbing, and arranged to rotate in a belt withdrawal direction and in an opposite belt retraction direction, a biasing arrangement for biasing the webbing spool for retracting the seat belt webbing, a detecting device for detecting if the tongue and the buckle are disengaged from each other, a sensing device for register the retraction speed of the seat belt webbing, and arranged to detect if the speed exceeds a predetermined threshold value, and an electric driving arrangement, arranged to limit the speed of the webbing.

In a preferred embodiment is the sensing device arranged to measure the rotational speed of said seat belt webbing spool.

In a preferred embodiment is the electrical driving arrangement arranged to control the rotational speed of said seat belt webbing spool.

In a preferred embodiment is the electrical driving arrangement comprised in a safety system for seat belt pretension.

In a preferred embodiment comprises the electrical driving arrangement at least one electrical motor controlled by an electrical control unit.

In yet another preferred embodiment is the electrical control unit connected to the detecting device and to the sensing device.

In another preferred embodiment is the sensing device for sensing the rotational speed of the webbing spool comprised in a safety system for seat belt pretension.

In yet another preferred embodiment comprises the biasing arrangement a mechanical spring mechanism, arranged to act on the webbing spool and to be energized when the seat belt webbing is withdrawn from a storage position.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a system according to the present invention.
Fig. 2 is a flow chart showing a method according to an embodiment of the present invention.

### DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout.Well-known functions or constructions will not necessarily be described in detail for brevity and/or clarity.

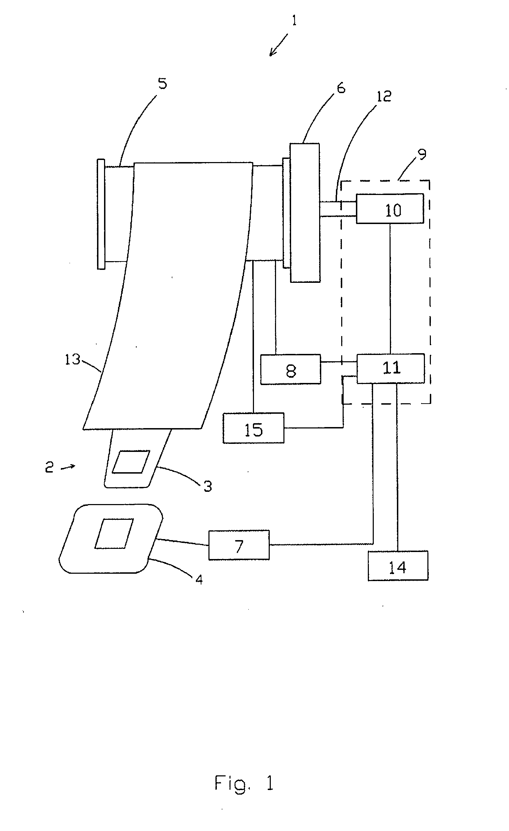

Fig. 1 illustrates a system 1 for seat belt retraction speed control according to the present invention. A seat belt 2 to be retracted comprises a seat belt webbing 13, and a tongue 3 and a buckle 4 for fastening the seat belt 2 when in use. A seat belt webbing spool 5 for storing the seat belt webbing is further comprised, and arranged to rotate in a belt withdrawal direction and in an opposite belt retraction direction. The system 1 further comprises a biasing arrangement 6 for biasing the webbing spool 5 for retracting the seat belt 2. The biasing arrangement 6 may for example be a mechanical spring mechanism. The biasing arrangement 6 is preferably arranged to be energized when the seat belt webbing 13 is withdrawn from its storage position, and to be in a released state when the webbing is stored and not in use. The system 1 further comprises a detecting device 7 indicating if the tongue 3 and the buckle 4 are disengaged from each other. Such detecting device may be any suitable type of sensor, detecting disengagement of the parts involved.

The system 1 further comprises a sensing device 8 for registering the speed of the seat belt webbing 13. Such sensing device may be any suitable type of sensor indicating the speed of the webbing, for example a device measuring the rotational speed of the seat belt webbing spool. The sensing device 8 is arranged to detect if the speed exceeds a predetermined threshold value. An electrical driving arrangement 9 arranged to control the speed of the webbing is further comprised. Such driving preferably comprises one, or several, electrical motors controlled by an electrical control unit 11. The electrical motor 10 is coupled to the webbing spool 5 via a momentum device, in the figure shown as a driving shaft 12. Any other type of momentum device may be used such as a gear mechanism or a clutch. The sensing device 8 is arranged for registering the speed. The control unit 11 monitors the speed via the sensing device 8, and is arranged to indicate if the speed threshold value is exceeded. The sensing device 8, the motor 10 and the control unit 11 may be parts of a safety system for seat belt pretension.

The electrical control unit is arranged to receive an indication that the retraction procedure is carried out in full and thus stop the motor. Such indication may be a signal from an end point sensor 15 sent to the control unit 11 indicating that an endpoint of the webbing spool retraction is reached. Alternatively, indication may be that the speed of the webbing monitored by the control unit 11 is approaching zero. The motor may also be stopped after a predetermined period of time passed since the user disengaged the tongue from the buckle. When in use, the system works as follows. When a user disengages the seat belt tongue 3 from the buckle 4, the biasing arrangement 6 starts to retract the seat belt webbing 13. A signal from the detecting device 7 indicates disengagement of the seat belt 2. The electrical control unit 11 monitors the speed of the webbing via a sensing device 8 and indicates if a predetermined threshold value of the speed is exceeded. If the speed is exceeded, the motor 10 is started and controlled in order to reduce the rotational speed of the spool 5.

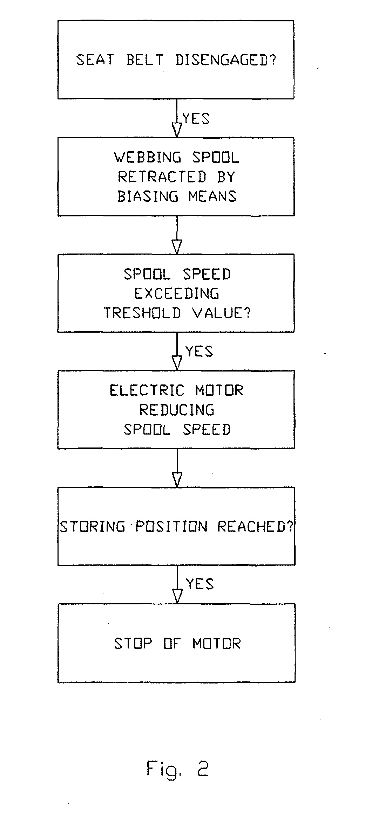

Fig. 2 is a flow chart showing a method according to the present invention. The method steps will now be described with reference to the flow chart depicted in the figure. According to the method of the present invention, the retraction action of a seat belt 2 starts directly when the user disengages the tongue 3 of the seat belt from the buckle 4. A biasing arrangement 6, for example a spring driven seat belt rewinding mechanism, is storing energy when the seat belt 2 is withdrawn or fastened, and is arranged to apply the stored energy on a seat belt webbing spool 5 used for storing the seat belt 2, thereby causing the spool 5 to rotate in a belt retracting direction. Thus, the biasing arrangement immediately starts to retract the webbing of the seat belt when the seat belt is released from the buckle 4. When the tongue 3 of the seat belt is disengaged from the buckle 4, this is detected by a detecting device 7, for example a sensor. A detecting device 8 for sensing the speed of the seat belt webbing registers the speed. If the speed exceeds a predetermined threshold value, the webbing speed is reduced.

In the example shown in the figure, the seat belt webbing speed is registered by measuring the rotational speed of the seat belt webbing spool. If the speed of the webbing is too high and the threshold value is exceeded, the webbing speed is controlled by an electrical driving arrangement 9. The electrical driving arrangement preferably comprises at least one electric motor 10 controlled by an electrical control unit 11. The speed when controlled by the electrical driving arrangement 9 can be reduced to a more appropriate, limited value. The control unit 11 indicates that the speed of the spool 5 exceeds the threshold value. Further, the control unit preferably receives an indication that an end position where the webbing is fully stored is reached, thus, the retraction action is completed. The motor 10 is then stopped. Thereby, the motor 10 is prevented from damages. The electric motor 10 may advantageously be the same motor as used in the seat belt pretension safety system. The control unit 11 may further advantageously be the same as used in the seat belt pretension safety system, arranged to receive signals 14 from the safety systems. To ensure proper functionality of the seat belt pretensioner, the motor 10 is arranged to limit the rotational retraction speed in accordance with the present method when the seat belt is disengaged.

## Claims

1. A method for seat belt retraction speed control,
said seat belt (2) to be retracted comprising a seat belt webbing (13), and a tongue (3) and a buckle (4) being engageable with each other,
a seat belt webbing spool (5) for storing said seat belt webbing being provided, said webbing spool being arranged to rotate in a belt withdrawal direction and in an opposite belt retraction direction,
said method comprising the steps of:
- rotating said webbing spool in the retraction direction by a biasing arrangement (6), thereby retracting said seat belt webbing,
**characterized in that**
**said method further comprises the steps of;**
- monitoring the retraction speed of said seat belt webbing (13), and, if said retraction speed exceeds a predetermined threshold value,
- limiting the retraction speed of said seat belt webbing (13) by controlling the webbing speed via an electrical driving arrangement (9).

2. Method according to claim 1, comprising the further step of:
- detecting if said tongue and said buckle are disengaged from each other.

3. Method according any of claims 1-2, wherein, in the step of monitoring, the seat belt webbing speed is sensed by measuring the rotational speed of said seat belt webbing spool (5).

4. Method according to any of claims 1-3, wherein, in the step of limiting, the seat belt webbing speed is limited by controlling the rotational speed of said seat belt webbing spool (5).

5. Method according to any of claims 1-4, wherein said method further comprises the steps of:
- detecting if an end position is reached by said webbing spool (5), and, if said end position is reached,
- stopping said electrical driving arrangement (9).

6. Method according to any of claims 1-4, wherein said method further comprises the steps of:
- monitoring if the speed of said webbing spool (5) is approaching zero, and,
- stopping said electrical driving arrangement (9).

7. Method according to any of claims 2-4, wherein said method further comprises the steps of:
- monitoring if a predetermined period of time has passed since disengagement of said tongue from said buckle occurred, and
- stopping said electrical driving arrangement (9).

8. Method according to any of claims 1-7, said electrical driving arrangement (9) comprising at least one electrical motor (10) and an electrical control unit (11), wherein said method further comprises the step of:
- controlling said at least one motor via said electrical control unit.

9. System (1) for seat belt retraction speed control comprising:
- a seat belt (2) to be retracted, said seat belt comprising a seat belt webbing (13), and a tongue (3) and a buckle (4) for fastening the seat belt when in use,
- a seat belt webbing spool (5) for storing said seat belt webbing, and arranged to rotate in a belt withdrawal direction and in an opposite belt retraction direction,
- a biasing arrangement (6) for biasing said webbing spool for retracting said seat belt webbing,
**characterized in that**
- a sensing device (8) for registering the retraction speed of said seat belt webbing, and
- an electrical driving arrangement (9), arranged to detect if the speed exceeds a predetermined threshold value, and arranged to limit the speed of said webbing.

10. System according to claim 9, further comprising a detecting device (7) for indicating if said tongue (3) and said buckle (4) are disengaged from each other.

11. System according to any of claims 9-10, wherein said sensing device (8) is arranged to measure the rotational speed of said seat belt webbing spool (5).

12. System according to any of claims 9-11, wherein said electrical driving arrangement (9) is arranged to control the rotational speed of said seat belt webbing spool (5).

13. System according to any of claims 9-12, wherein said electrical driving arrangement (9) is comprised in a safety system for seat belt pretension.

14. System according to any of claims 9-13, wherein said electrical driving arrangement (9) comprises at least one electrical motor (10) controlled by an electrical control unit (11), said electrical motor being coupled to said seat belt webbing spool (5).

15. System according any of claims 9-14, wherein said biasing arrangement (6) comprises a mechanical spring mechanism, arranged to act on said seat belt webbing spool (5) and to be energized when the seat belt webbing (13) is withdrawn from a storage position.

## Patentansprüche

1. Verfahren zur Steuerung der Sitzgurteinziehgeschwindigkeit, wobei:
der einziehbare Sitzgurt (2) ein Sitzgurtband (13) sowie eine Gurtzunge (3) und ein Gurtschloss (4), die ineinandergreifen können, umfasst;
eine Sitzgurtbandspule (5) zum Lagern des Sitzgurtbandes bereitgestellt wird, wobei die Gurtbandspule so angeordnet ist, dass sie sich in einer Gurtausziehrichtung und in einer entgegengesetzten Gurteinziehrichtung drehen kann;
wobei das Verfahren die folgenden Schritte umfasst:
- Drehen der Gurtbandspule in der Einziehrichtung durch eine Vorspannanordnung (6), wodurch das Sitzgurtband eingezogen wird,
**dadurch gekennzeichnet, dass**
**das Verfahren weiterhin die folgenden Schritte umfasst:**
- Überwachen der Einziehgeschwindigkeit des Sitzgurtbandes (13) und, falls die Einziehgeschwindigkeit einen vorbestimmten Grenzwert überschreitet,
- Begrenzen der Einziehgeschwindigkeit des Sitzgurtbandes (13) durch Steuerung der Bandgeschwindigkeit über eine elektrische Antriebsanordnung (9).

2. Verfahren nach Anspruch 1, das weiterhin den folgenden Schritt umfasst:
- Ermitteln, ob die Zunge und das Schloss voneinander gelöst sind.

3. Verfahren nach einem der Ansprüche 1 bis 2, bei dem, im Schritt des Überwachens, die Sitzgurtbandgeschwindigkeit durch Messen der Drehgeschwindigkeit der Sitzgurtbandspule (5) abgefühlt wird.

4. Verfahren nach einem der Ansprüche 1 bis 3, bei dem, im Schritt des Begrenzens, die Sitzgurtbandgeschwindigkeit durch Steuern der Drehgeschwindigkeit der Sitzgurtbandspule (5) begrenzt wird.

5. Verfahren nach einem der Ansprüche 1 bis 4, wobei das Verfahren weiterhin die folgenden Schritte umfasst:
- Ermitteln, ob die Bandspule (5) eine Endposition erreicht hat, und, wenn die Endposition erreicht ist,
- Stoppen der elektrischen Antriebsanordnung (9).

6. Verfahren nach einem der Ansprüche 1 bis 4, wobei das Verfahren weiterhin die folgenden Schritte umfasst:
- Überwachen, ob sich die Geschwindigkeit der Bandspule (5) dem Wert Null nähert, und
- Stoppen der elektrischen Antriebsanordnung (9).

7. Verfahren nach einem der Ansprüche 2 bis 4, wobei das Verfahren weiterhin die folgenden Schritte umfasst:
- Überwachen, ob eine vorbestimmte Zeitdauer seit dem erfolgten Loslösen der Zunge aus dem Schloss vergangen ist, und
- Stoppen der elektrischen Antriebsanordnung (9).

8. Verfahren nach einem der Ansprüche 1 bis 7, bei dem die elektrische Antriebsanordnung (9) mindestens einen Elektromotor (10) und eine elektrische Steuereinheit (11) umfasst, wobei das Verfahren weiterhin den folgenden Schritt umfasst:
- Steuern des mindestens einen Motors über die elektrische Steuereinheit.

9. System (1) zur Steuerung der Sitzgurteinziehgeschwindigkeit, das Folgendes umfasst:
- einen einziehbaren Sitzgurt (2), wobei der Sitzgurt ein Sitzgurtband (13) sowie eine Zunge (3) und ein Schloss (4) umfasst, mit denen der Sitzgurt im Gebrauch befestigt werden kann,
- eine Sitzgurtbandspule (5) zum Lagern des Sitzgurtbandes, die so angeordnet ist, dass sie sich in einer Gurtausziehrichtung und in einer entgegengesetzten Gurteinziehrichtung drehen kann,
- eine Vorspannanordnung (6) zum Vorspannen der Bandspule, um das Sitzgurtband einzuziehen,
**dadurch gekennzeichnet, dass**
- eine Sensorvorrichtung (8) zum Abfühlen der Einziehgeschwindigkeit des Sitzgurtbandes vorgesehen ist, und
- eine elektrische Antriebsanordnung (9) vorgesehen ist, um zu ermitteln, ob die Geschwindigkeit einen vorbestimmten Grenzwert überschreitet, und die angeordnet ist, um die Geschwindigkeit des Bandes zu begrenzen.

10. System nach Anspruch 9, das weiterhin eine Detektorvorrichtung (7) umfasst, um anzuzeigen, ob die Zunge (3) und das Schloss (4) voneinander gelöst sind.

11. System nach einem der Ansprüche 9 bis 10, bei dem die Sensorvorrichtung (8) angeordnet ist, um die Drehgeschwindigkeit der Sitzgurtbandspule (5) zu messen.

12. System nach einem der Ansprüche 9 bis 11, bei dem die elektrische Antriebsanordnung (9) angeordnet ist, um die Drehgeschwindigkeit der Sitzgurtbandspule (5) zu steuern.

13. System nach einem der Ansprüche 9 bis 12, bei dem die elektrische Antriebsanordnung (9) in einem Sicherheitssystem zur Sitzgurtvorspannung enthalten ist.

14. System nach einem der Ansprüche 9 bis 13, bei dem die elektrische Antriebsanordnung (9) mindestens einen von einer elektrischen Steuereinheit (11) gesteuerten Elektromotor (10) umfasst, wobei der Elektromotor mit der Sitzgurtbandspule (5) gekoppelt ist.

15. System nach einem der Ansprüche 9 bis 14, bei dem die Vorspannanordnung (6) einen mechanischen Federmechanismus umfasst, der angeordnet ist, um auf die Sitzgurtbandspule (5) einzuwirken, und der betätigt wird, wenn das Sitzgurtband (13) aus einer Lagerposition herausgezogen wird.

## Revendications

1. Procédé pour la commande de la vitesse de rétraction d'une ceinture de sécurité,
ladite ceinture de sécurité (2) devant être rétractée comprenant une sangle de ceinture de sécurité (13), et une langue (3) et une boucle (4) pouvant s'engager l'une avec l'autre,
une bobine de sangle de ceinture de sécurité (5) destinée à stocker ladite sangle de ceinture de sécurité étant prévue, ladite bobine de sangle étant prévue pour tourner dans une direction de sortie de ceinture et dans une direction de rétraction de ceinture opposée,
ledit procédé comprenant les étapes suivantes :
- faire tourner ladite bobine de sangle dans la direction de rétraction par un agencement de précontrainte (6), pour ainsi rétracter ladite sangle de ceinture de sécurité,
**caractérisé en ce que**
ledit procédé comprend en outre les étapes suivantes :
- contrôler la vitesse de rétraction de ladite sangle de ceinture de sécurité (13) et, si ladite vitesse de rétraction dépasse une valeur seuil prédéterminée,
- limiter la vitesse de rétraction de ladite sangle de ceinture de sécurité (13) en commandant la vitesse de la sangle par le biais d'un agencement d'entraînement électrique (9).

2. Procédé selon la revendication 1, comprenant l'étape supplémentaire suivante :
- détecter si ladite langue et ladite boucle sont désengagées l'une de l'autre.

3. Procédé selon l'une quelconque des revendications 1 et 2, dans lequel, dans l'étape de contrôle, la vitesse de la sangle de ceinture de sécurité est détectée en mesurant la vitesse de rotation de ladite bobine de sangle de ceinture de sécurité (5).

4. Procédé selon l'une quelconque des revendications 1 à 3, dans lequel, dans l'étape de limitation, la vitesse de la sangle de ceinture de sécurité est limitée en commandant la vitesse de rotation de ladite bobine de sangle de ceinture de sécurité (5).

5. Procédé selon l'une quelconque des revendications 1 à 4, dans lequel ledit procédé comprend en outre les étapes suivantes :
- détecter si une position d'extrémité est atteinte par ladite bobine de sangle (5) et, si ladite position d'extrémité est atteinte,
- arrêter ledit agencement d'entraînement électrique (9).

6. Procédé selon l'une quelconque des revendications 1 à 4, dans lequel ledit procédé comprend en outre les étapes suivantes :
- contrôler si la vitesse de ladite bobine de sangle (5) s'approche de zéro, et
- arrêter ledit agencement d'entraînement électrique (9).

7. Procédé selon l'une quelconque des revendications 2 à 4, dans lequel ledit procédé comprend en outre les étapes suivantes :
- contrôler si une période de temps prédéterminée s'est écoulée depuis le désengagement de ladite langue et de ladite boucle, et
- arrêter ledit agencement d'entraînement électrique (9).

8. Procédé selon l'une quelconque des revendications 1 à 7, ledit agencement d'entraînement électrique (9) comprenant au moins un moteur électrique (10) et une unité de commande électrique (11), ledit procédé comprenant en outre l'étape suivante :
- commander ledit au moins un moteur par le biais de ladite unité de commande électrique.

9. Système (1) pour la commande de la vitesse de rétraction d'une ceinture de sécurité, comprenant :
- une ceinture de sécurité (2) devant être rétractée, ladite ceinture de sécurité comprenant une sangle de ceinture de sécurité (13), et une langue (3) et une boucle (4) destinées à attacher la ceinture de sécurité pendant l'utilisation,
- une bobine de sangle de ceinture de sécurité (5) pour stocker ladite sangle de ceinture de sécurité, et prévue pour tourner dans une direction de sortie de ceinture et dans une direction de rétraction de ceinture opposée,
- un agencement de précontrainte (6) pour précontraindre ladite bobine de sangle de manière à ce qu'elle rétracte ladite sangle de ceinture de sécurité,
**caractérisé par**
- un dispositif capteur (8) pour enregistrer la vitesse de rétraction de ladite sangle de ceinture de sécurité, et
- un agencement d'entraînement électrique (9), prévu pour détecter si la vitesse dépasse une valeur seuil prédéterminée, et prévu pour limiter la vitesse de ladite sangle.

10. Système selon la revendication 9, comprenant en outre un dispositif de détection (7) pour indiquer si ladite langue (3) et ladite boucle (4) sont désengagées l'une de l'autre.

11. Système selon l'une quelconque des revendications 9 et 10, dans lequel ledit dispositif capteur (8) est prévu pour mesurer la vitesse de rotation de ladite bobine de sangle de ceinture de sécurité (5).

12. Système selon l'une quelconque des revendications 9 à 11, dans lequel ledit agencement d'entraînement électrique (9) est prévu pour commander la vitesse de rotation de ladite bobine de sangle de ceinture de sécurité (5).

13. Système selon l'une quelconque des revendications 9 à 12, dans lequel ledit agencement d'entraînement électrique (9) est inclus dans un système de sécurité pour le pré-tensionnement d'une ceinture de sécurité.

14. Système selon l'une quelconque des revendications 9 à 13, dans lequel ledit agencement d'entraînement électrique (9) comprend au moins un moteur électrique (10) commandé par une unité de commande électrique (11), ledit moteur électrique étant accouplé à ladite bobine de sangle de ceinture de sécurité (5).

15. Système selon l'une quelconque des revendications 9 à 14, dans lequel ledit agencement de précontrainte (6) comprend un mécanisme de ressort mécanique, prévu pour agir sur ladite bobine de sangle de ceinture de sécurité (5) et pour être activé lorsque la sangle de ceinture de sécurité (13) est sortie d'une position de stockage.
